(19) Europäisches Patentamt / European Patent Office / Office européen des brevets

(11) **EP 3 607 302 B1**

(12) **FASCICULE DE BREVET EUROPEEN**

(45) Date de publication et mention de la délivrance du brevet:
**15.03.2023 Bulletin 2023/11**

(21) Numéro de dépôt: **18717006.3**

(22) Date de dépôt: **05.04.2018**

(51) Classification Internationale des Brevets (IPC):
**G01N 21/25** *(2006.01)*  **G01N 21/27** *(2006.01)*
**G01N 21/47** *(2006.01)*

(52) Classification Coopérative des Brevets (CPC):
**G01N 21/274; G01N 21/25; G01N 21/47**

(86) Numéro de dépôt international:
**PCT/EP2018/058754**

(87) Numéro de publication internationale:
**WO 2018/185234 (11.10.2018 Gazette 2018/41)**

(54) **PROCEDE DE DETERMINATION DU TAUX DE RECOUVREMENT D'UNE PIECE METALLIQUE AYANT SUBI UN TRAITEMENT MODIFIANT LA RUGOSITE DE SURFACE DE LADITE PIECE**

VERFAHREN ZUR BESTIMMUNG DER BEDECKUNGSRATE EINES METALLISCHEN OBJEKTS DESSEN OBERFLÄCHEN-RAUIGKEIT DURCH EINE BEHANDLUNG VERÄNDERT WURDE

METHOD OF DETERMINING THE COVERAGE RATE OF A METAL OBJECT THE SURFACE ROUGHNESS OF WHICH HAS BEEN ALTERED BY A TREATMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.04.2017 FR 1752958**

(43) Date de publication de la demande:
**12.02.2020 Bulletin 2020/07**

(73) Titulaire: **Safran**
**75015 Paris (FR)**

(72) Inventeurs:
• **BEN SALAH, Nihad**
**77550 Moissy-Crayamel (FR)**
• **BADREDDINE, Jawad**
**77550 Moissy-Crayamel (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
**JP-A- 2015 160 282**

• **NOOR A IBRAHEEM ET AL: "Understanding Color Models: A Review", ARPN JOURNAL OF SCIENCE AND TECHNOLOGY, vol. 2, no. 3, 1 avril 2012 (2012-04-01), pages 265-275, XP055427620,**
• **HILL B ET AL: "Comparative analysis of the quantization of color spaces on the basis of the CIELAB color-difference formula", ACM TRANSACTIONS ON GRAPHICS (TOG), ACM, US, vol. 16, no. 2, 1 avril 1997 (1997-04-01), pages 109-154, XP058336025, ISSN: 0730-0301, DOI: 10.1145/248210.248212**
• **L C VIEIRA ET AL: "Application of computer vision methods to estimate the coverage of peen formed plates", JOURNAL OF ACHIEVEMENTS IN MATERIALS AND MANUFACTURING ENGINEERING, vol. 43, no. 2, 1 décembre 2010 (2010-12-01), pages 743-749, XP055427631,**

**Description**

DOMAINE TECHNIQUE

La présente invention a pour objet un procédé de détermination du taux de recouvrement d'une pièce métallique ayant subi un traitement modifiant la rugosité de sa surface, tel qu'un grenaillage, un sablage ou un usinage. Le procédé s'applique en particulier à des pièces telles que les composants de train d'atterrissage (pistons, cylindres...), ou de turbomachines (disques, aubes, rouets, arbres, pignons...).

ETAT DE L'ART

Le grenaillage de précontrainte (par exemple à buse, à turbine, ou à ultrasons) d'une pièce est un procédé de renforcement mécanique de surface impliquant une déformation plastique, et qui améliore la durée de vie de la pièce. Il s'agit plus particulièrement de projeter à grande vitesse des billes en acier, verre ou céramique, appelées grenailles, à la surface de la pièce. Lors de l'impact, chaque bille génère une indentation à la surface de la pièce. Sous l'action du martelage répété des billes, la surface, ayant dépassé la limite d'élasticité, subit une déformation plastique sur une profondeur qui varie entre quelques centièmes et plusieurs dixièmes de millimètre, suivant l'intensité du grenaillage et la dureté de la pièce, modifiant ainsi la rugosité de surface.

Afin que le grenaillage induise des propriétés homogènes en surface et sous-couche, la surface doit être entièrement recouverte par les impacts de billes. C'est pourquoi le contrôle du taux de recouvrement de la pièce par les indentations de billes est un paramètre essentiel de contrôle de ce procédé.

Le taux de recouvrement est défini comme étant le rapport de la surface soumise à une déformation plastique (au grenaillage) sur la surface totale à traiter, exprimé en pourcentage. Le taux de recouvrement peut être supérieur à 100%, lorsque la durée de grenaillage dépasse la durée requise pour obtenir un taux de recouvrement de 100%. Par exemple, un taux de recouvrement de 125% correspond à une durée de grenaillage égale à 1,25 fois la durée requise pour atteindre un recouvrement complet. Pour certaines zones critiques d'une pièce, un recouvrement maximum peut être imposé, par exemple un recouvrement maximum de 400 %.

Selon les spécifications internes ou industrielles, comme la norme SAE J2277, le recouvrement est un paramètre qui s'évalue à l'aide d'une loupe ou binoculaire ayant un grossissement supérieur ou égal à x10. Ce type d'évaluation se fait à l'oeil et repose sur l'acuité visuelle et l'expérience de l'opérateur qui réalise le contrôle. En d'autres termes, pour une même zone grenaillée, il est possible d'avoir une évaluation différente d'un opérateur à l'autre. De plus, l'acuité visuelle de l'être humain ne permet pas de distinguer des recouvrements supérieurs à 98%, ce qui correspond à ce que la norme SAE J2277 considère être un recouvrement complet (full coverage en langue anglaise). En fonction du matériau grenaillé et de son état de surface initial, l'évaluation du recouvrement peut se révéler comme une opération non triviale et coûteuse en temps.

On connaît de l'état de la technique différentes techniques permettant de déterminer le taux de recouvrement d'une pièce de turbomachine.

Le document GB 1 468 008 décrit un procédé consistant à déposer sur la surface de la pièce, avant grenaillage, un liquide fluorescent révélable à l'aide d'une lampe à rayonnement ultraviolet. Lors du grenaillage, les différentes indentations écaillent localement la peinture et la retirent de la surface de la pièce. Cependant, l'évaluation du recouvrement repose toujours sur une inspection visuelle et subjective par l'opérateur.

Le document JP 2011-152603 A décrit un dispositif doté d'un moyen de capture d'images et d'un logiciel dédié pour les traiter. Il s'agit de prendre des images de la surface grenaillée, de la binariser en une image noir et blanc, puis de fournir une estimation du recouvrement. Cependant, ce dispositif nécessite d'être calibré avant chaque série de mesure. En effet, l'opérateur doit réaliser des prises de vue pour des recouvrements différents et faire correspondre la valeur donnée par l'appareil au recouvrement effectif de la surface, sur la base d'une évaluation à l'oeil par l'opérateur en amont. Malgré les apparences, ce mode de mesure reste subjectif et repose toujours sur l'acuité visuelle de l'opérateur qui doit étalonner les images.

Le document JP 2015 160282 A décrit un procédé pour déterminer le taux de recouvrement d'une pièce grenaillée en utilisant sa luminance et une fonction d'étalonnage. La fonction d'étalonnage est créée sur la base de pièces d'étalonnage ayant des taux de recouvrement de 0% à 100%.

La présente invention vise à remédier à ces inconvénients, en proposant un procédé de détermination du taux de recouvrement d'une pièce métallique ayant subi un traitement modifiant la rugosité de sa surface, tel qu'un grenaillage, un sablage, ou un usinage, le procédé étant précis, non invasif, et permettant de s'affranchir d'une inspection visuelle de la pièce.

EXPOSE DE L'INVENTION

L'invention a ainsi pour objet un procédé de détermination du taux de recouvrement d'une pièce métallique ayant subi un traitement modifiant la rugosité de surface de ladite pièce tel que défini dans la revendication 1.

Le procédé selon l'invention comprend entre autres les étapes suivantes :

- une étape de détermination d'une fonction d'étalonnage d'un paramètre de l'espace de couleur CIELAB en fonction du taux de recouvrement, de manière à pouvoir associer à une valeur donnée dudit paramètre la valeur correspondante du taux de recouvrement,
- une étape de mesure de la valeur dudit paramètre de ladite pièce, et
- une étape de détermination du taux de recouvrement de ladite pièce, en associant, à l'aide de la fonction d'étalonnage, à la valeur ainsi mesurée dudit paramètre, la valeur correspondante du taux de recouvrement de la pièce.

Ainsi, l'utilisation d'un paramètre de couleur CIELAB pour déterminer le taux de recouvrement de la pièce permet de s'affranchir d'une inspection visuelle de la pièce. La fonction d'étalonnage, caractéristique de la pièce, permet en outre une détermination précise du taux de recouvrement.

Ledit au moins un paramètre de l'espace de couleur CIELAB peut être choisi parmi la clarté L*, la composante chromatique du vert au rouge a*, et la composante chromatique du bleu au jaune b*.

Ledit au moins un paramètre de l'espace de couleur CIELAB peut être un écart de colorimétrie ΔE entre deux états de surface différents, défini par la relation:

$$E_{2-1} = \Delta E = \sqrt{(L^*_2 - L^*_1)^2 + (a_2 - a^*_1)^2 + (b^*_2 - b^*_1)^2}$$

dans laquelle $(L^*_1 ; a^*_1, b^*_1)$ et $(L^*_2; a^*_2, b^*_2)$ sont les paramètres de l'espace de couleur CIELAB pour deux états de surface différents.

La détermination d'une fonction d'étalonnage dudit au moins un paramètre de l'espace de couleur CIELAB en fonction du taux de recouvrement est réalisée en mesurant la valeur d'un paramètre de l'espace de couleur CIELAB pour différentes valeurs de taux de recouvrement d'une pièce d'étalonnage.

Les différentes valeurs de taux de recouvrement de la pièce d'étalonnage appartiennent à un intervalle prédéterminé, l'intervalle prédéterminé comportant notamment le taux de recouvrement à déterminer.

Selon un mode de réalisation ne faisant pas partie de l'invention revendiquée, l'intervalle prédéterminé de taux de recouvrement peut comprendre des valeurs inférieures à 100%.

L'intervalle prédéterminé de taux de recouvrement comprend des valeurs supérieures à 100%. L'intervalle prédéterminé de taux de recouvrement peut notamment comprendre des valeurs supérieures à 400%.

Le procédé peut comprendre en outre une étape de caractérisation de la nature du matériau de la pièce, par comparaison de la fonction d'étalonnage avec au moins une fonction d'étalonnage caractéristique d'un matériau donné.

Le procédé peut comprendre en outre une étape de caractérisation de l'état de surface de la pièce, par comparaison de la valeur dudit paramètre, pour un taux de recouvrement donné, avec au moins une valeur dudit paramètre, caractéristique d'un état de surface donné, pour le même taux de recouvrement donné.

Le traitement modifiant la rugosité de surface de ladite pièce peut être un grenaillage, un sablage ou un usinage.

Ladite pièce peut être une pièce de train d'atterrissage d'aéronef ou une pièce de turbomachine.

DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :

- les figures 1 et 2 sont des diagrammes illustrant un espace colorimétrique CIELAB ;
- la figure 3 illustre schématiquement la réflexion de la lumière sur une surface ;
- la figure 4 est un diagramme montrant l'évolution de la clarté L* d'une surface pour différents taux de recouvrement ;
- la figure 5 est un diagramme illustrant la formation d'une fonction d'étalonnage pour une mesure selon l'invention, conformément à un premier mode de réalisation ;
- la figure 6 est un diagramme illustrant la formation d'une fonction d'étalonnage pour une mesure selon l'invention, conformément à un deuxième et à un troisième mode de réalisation ;
- la figure 7 est un diagramme illustrant la formation d'une fonction d'étalonnage pour une mesure selon l'invention, conformément à un quatrième et à un cinquième mode de réalisation ; et

- la figure 8 est un diagramme illustrant la caractérisation d'un état de surface, conformément à une variante de la mesure selon l'invention.

DESCRIPTION DETAILLEE

Trois paramètres sont nécessaires et suffisants pour définir une couleur. On peut donc représenter l'ensemble des couleurs dans un repère en trois dimensions.

Un espace colorimétrique désigne le volume géométrique correspondant à un ensemble de couleurs disponibles dans un système colorimétrique. La notion de modèle colorimétrique fait référence aux différentes façons dont on va utiliser les nombres pour décrire une couleur, mais aussi la façon d'effectuer les mélanges de couleur. Un modèle colorimétrique est une sorte de classement générique des familles d'espace colorimétriques.

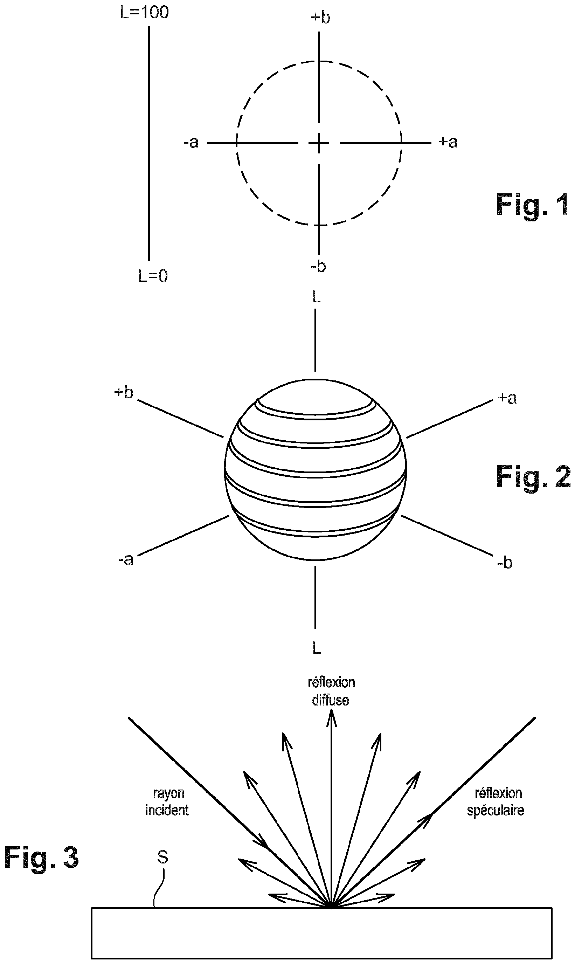

Le modèle CIELAB (ou CIE LAB, ou encore CIE L*a*b*), a été adopté par la CIE (Commission Internationale de l'Eclairage) en 1976. Il modélise la vision humaine et est indépendant d'un quelconque matériel. L'espace de colorimétrie CIELAB est illustré aux figures 1 et 2.

La composante L* est la clarté, qui va de 0 (noir) à 100 (blanc). La clarté traduit la luminosité d'une surface. Une surface très lumineuse possède une forte clarté tandis qu'une surface parfaitement noire possède une clarté nulle. Les paramètres (L*a*b*) constituent l'espace de paramètres qui définissent et bornent la mesure de colorimétrie, et cela conformément à la définition de l'espace CIE LAB par la Commission Internationale de l'Eclairage (CIE). Dans le repère des couleurs a*b*, l'augmentation des valeurs de a* et b* indique une augmentation de la saturation des couleurs.

La composante a* est la composante chromatique du vert au rouge. Elle représente une gamme de 600 niveaux sur un axe vert (-300) $\rightarrow$ rouge (+299).

La composante b* est la composante chromatique du bleu au jaune. Elle représente une gamme de 600 niveaux sur un axe bleu (-300) $\rightarrow$ jaune (+299).

La réflexion de lumière sur une surface S est généralement un mixte de deux modes de réflexion : une réflexion diffuse et une réflexion spéculaire (figure 3). Une surface est dite brillante si la réflexion est majoritairement spéculaire, semi-mate si la réflexion spéculaire est faible ou « complexe >> si la lumière est aléatoirement réfléchie et diffusée. Le rayon incident qui sert à éclairer la surface afin de réaliser une mesure de colorimétrie fait typiquement un angle de 5° à 15° avec la normale à la surface S, par exemple un angle de 10°.

L'écart de colorimétrie ($\Delta E$) entre deux états de surface différents, dans l'espace des valeurs L*a*b*, est défini par la relation:

$$E_{2-1} = \Delta E = \sqrt{(L^*_2 - L^*_1)^2 + (a_2 - a^*_1)^2 + (b^*_2 - b^*_1)^2}$$

($L^*_1$ ; $a^*_1$, $b^*_1$) et ($L^*_2$ ; $a^*_2$, $b^*_2$) étant les paramètres de l'espace de couleur CIELAB pour deux état de surface différents, comme par exemple un état avant et après grenaillage, ou encore deux taux de recouvrement différents.

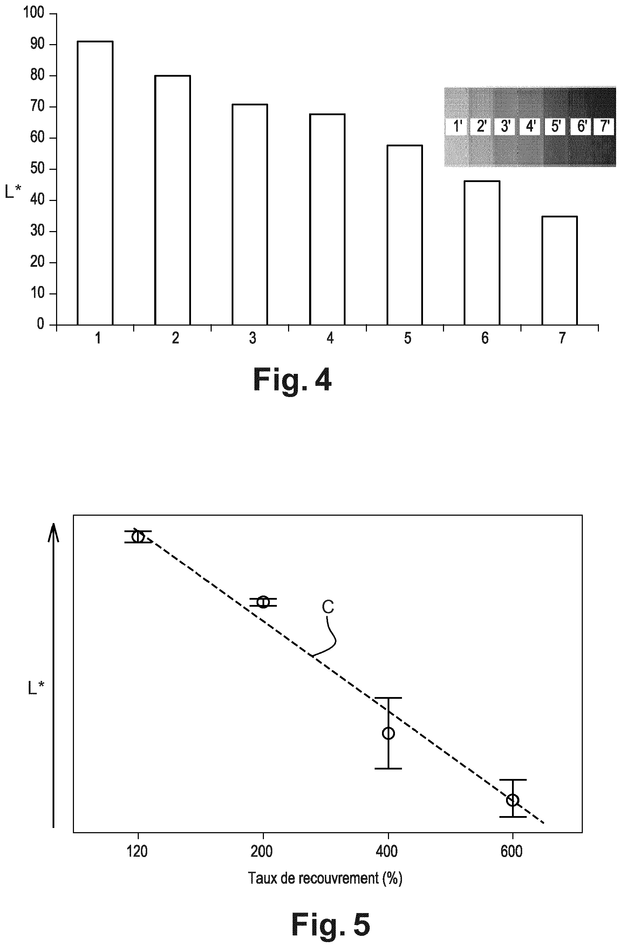

L'invention s'appuie sur le fait que, lorsqu'une surface est grenaillée, les indentations de billes modifient la topographie de la surface. Cette modification de surface, par rapport à un état de référence (avant grenaillage, par exemple), influence la manière dont la lumière est réfléchie par la surface. La figure 4 montre l'évolution de la clarté L* d'une surface pour différents taux de recouvrement 1 à 7, le taux de recouvrement 1 étant le plus bas et le taux de recouvrement 7 étant le plus élevé. Ceci se traduit par une diminution de la clarté L* avec l'augmentation du taux de recouvrement. En outre, on constate visuellement que plus on grenaille une surface, et plus elle apparait matte. La partie en haut à droite de la figure 4 montre les états visuels 1' à 7' de la pièce correspondant aux taux de recouvrement 1 à 7. Le changement de la topographie de surface peut également affecter la couleur perçue, à savoir les paramètres a* et b*.

Le procédé selon l'invention permet de déterminer le taux de recouvrement d'une pièce de turbomachine soumise à une déformation plastique, comme par exemple un grenaillage ou un sablage.

Le procédé comprend la détermination d'une fonction d'étalonnage (ou courbe d'étalonnage) d'un paramètre de l'espace de couleur CIELAB en fonction du taux de recouvrement d'une pièce d'étalonnage, et notamment pour un intervalle de taux de recouvrement donné.

Pour déterminer cette courbe d'étalonnage, on procède à la mesure de la valeur du paramètre pour plusieurs valeurs du taux de recouvrement de la pièce.

A titre d'exemple, des éprouvettes en acier inoxydable, de type acier inoxydable austénitique (AISI) 316L, sont soumises à un polissage miroir. Le polissage miroir est une finition qui nécessite de supprimer l'intégralité des défauts et de réaliser un polissage brillant parfait. Les éprouvettes sont grenaillées à différents taux de recouvrement, dans cet exemple à 120%, 200%, 400% et 600%, donc sur l'intervalle allant de 120% à 600%. Le paramètre de l'espace de couleur CIELAB choisi est la clarté L*. On mesure la valeur de la clarté L* pour chaque taux de recouvrement (figure 5).

On détermine la courbe d'étalonnage C par extrapolation, par exemple par régression linéaire (typiquement par la méthode des moindre carrés).

Une fois la courbe d'étalonnage C obtenue, on sait associer à une valeur de clarté L* donnée la valeur correspondante du taux de recouvrement. Il suffit ainsi, pour une pièce soumise à un grenaillage, de mesurer la valeur du paramètre (par exemple la clarté L* comme illustré sur la figure 5) de la pièce, et d'en déduire le taux de recouvrement correspondant à l'aide de la courbe d'étalonnage.

La clarté L* est un paramètre particulièrement efficace pour déterminer le taux de recouvrement. On peut toutefois également utiliser comme paramètre les composantes chromatiques a* et b*.

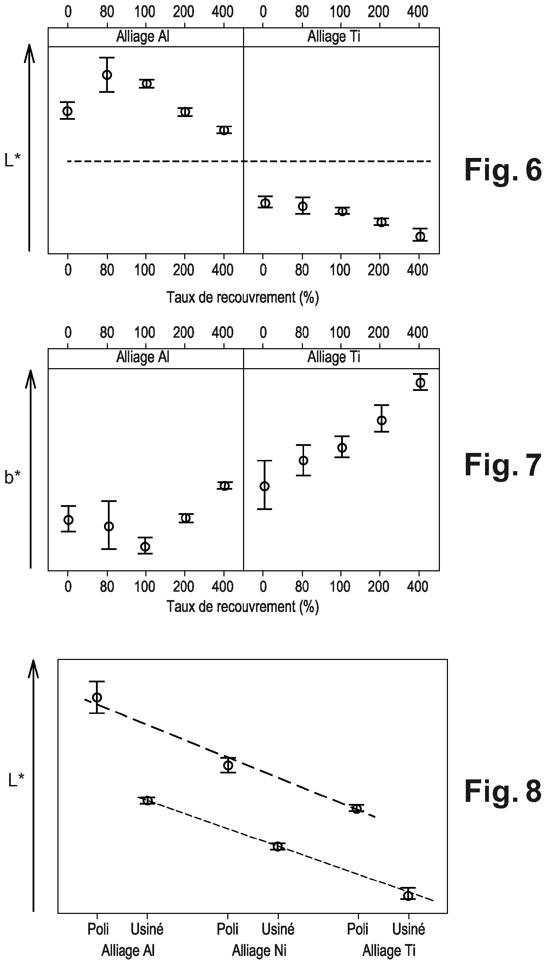

Dans l'exemple illustré à la figure 6, deux types d'alliages ont été testés, à savoir un alliage à base d'aluminium sur la partie gauche de la figure 6, et un alliage à base de titane sur la partie droite de la figure 6. L'alliage à base d'aluminium est l'alliage 2024-T3, et l'alliage à base de titane est l'alliage Ti-6Al-4V (désigné sous la référence R56400 dans le système UNS).

Des éprouvettes usinées à partir de ces deux alliages ont été grenaillées à des taux de recouvrement de 0%, 80%, 100%, 200% et 400%, soit sur l'intervalle de taux de recouvrement allant de 0% à 400%. Sur des surfaces non polies (usinées), les mesures de colorimétrie s'avèrent efficaces pour quantifier le recouvrement. Le paramètre de l'espace de couleur CIELAB choisi est la clarté L*. On observe que la clarté L* diminue globalement avec le taux de recouvrement.

Comme pour l'exemple illustré à la figure 5, on complète la courbe d'étalonnage par extrapolation de manière à pouvoir associer à une valeur de clarté L* donnée la valeur correspondante du taux de recouvrement.

On constate que les plages de valeurs de la clarté L* sont différentes pour chaque alliage, ce qui permet également de caractériser un type d'alliage par sa courbe d'étalonnage.

En variante, on a testé les éprouvettes de la figure 6 avec un autre paramètre de l'espace de couleur CIELAB : la composante chromatique du bleu au jaune b* (figure 7). On constate cette fois que la composante chromatique b* augmente globalement avec le taux de recouvrement. On constate à nouveau que les plages de valeurs de la composante chromatique b* sont différentes pour chaque alliage, ce qui permet également de caractériser un type d'alliage par sa courbe d'étalonnage.

Dans un autre mode de réalisation, illustré à la figure 8, on a testé trois alliages métalliques, pour un taux de recouvrement donné, avec pour chaque famille un état de surface poli et un état de surface usiné (par rectification). Le paramètre de l'espace de couleur CIELAB choisi est la clarté L*. Le taux de recouvrement est de 0%, c'est-à-dire que les éprouvettes n'ont pas subi de grenaillage. Les alliages testés sont un alliage à base d'aluminium, un alliage à base de nickel et un alliage à base de titane. L'alliage à base d'aluminium est l'alliage 2024-T3, l'alliage à base de nickel est l'alliage Inconel® 718 commercialisé par la société Special Metals Corporation, et l'alliage à base de titane est l'alliage Ti-6Al-4V (désigné sous la référence R56400 dans le système UNS).

On observe que la clarté varie en fonction de l'alliage utilisé, mais également en fonction de l'état de surface (poli ou usiné). Le paramètre de l'espace de couleur permet donc également de caractériser à la fois le type d'alliage et l'état de surface.

**Revendications**

1. Procédé de détermination du taux de recouvrement d'une pièce métallique ayant subi un traitement modifiant la rugosité de surface de ladite pièce, **caractérisé en ce qu'**il comprend les étapes suivantes :

   - une étape de détermination d'une fonction d'étalonnage (C) d'au moins un paramètre (L*, a*, b*, ΔE) de l'espace de couleur CIELAB en fonction du taux de recouvrement, de manière à pouvoir associer à une valeur donnée dudit au moins un paramètre (L*, a*, b*, ΔE) la valeur correspondante du taux de recouvrement,
   - une étape de mesure de la valeur dudit au moins un paramètre (L*, a*, b*, ΔE) de ladite pièce, et
   - une étape de détermination du taux de recouvrement de ladite pièce, en associant, à l'aide de la fonction d'étalonnage (C), à la valeur ainsi mesurée dudit au moins un paramètre (L*, a*, b*, ΔE), la valeur correspondante du taux de recouvrement de la pièce,
   **en ce que** la détermination d'une fonction d'étalonnage dudit au moins un paramètre (L*, a*, b*, ΔE) de l'espace de couleur CIELAB en fonction du taux de recouvrement est réalisée en mesurant la valeur d'un paramètre de l'espace de couleur CIELAB pour différentes valeurs de taux de recouvrement d'une pièce d'étalonnage,
   **en ce que** les différentes valeurs de taux de recouvrement de la pièce d'étalonnage appartiennent à un intervalle prédéterminé,
   et **en ce que** l'intervalle prédéterminé de taux de recouvrement comprend des valeurs supérieures à 100%.

2. Procédé selon la revendication 1, **caractérisé en ce que** ledit au moins un paramètre (L*, a*, b*, ΔE) de l'espace de couleur CIELAB est choisi parmi la clarté L*, la composante chromatique du vert au rouge a*, et la composante chromatique du bleu au jaune b*.

3. Procédé selon la revendication 2, **caractérisé en ce que** ledit au moins un paramètre (L*, a*, b*, ΔE) de l'espace de couleur CIELAB est un écart de colorimétrie ΔE entre deux états de surface différents, défini par la relation:

$$E_{2-1} = \Delta E = \sqrt{(L^*_2 - L^*_1)^2 + (a_2 - a^*_1)^2 + (b^*_2 - b^*_1)^2}$$

dans laquelle (L*_1 ; a*_1, b*_1) et (L*_2; a*_2, b*_2) sont les paramètres de l'espace de couleur CIELAB pour deux états de surface différents.

4. Procédé selon l'une des revendications 1 à 3, **caractérisé en ce que** l'intervalle prédéterminé de taux de recouvrement comprend des valeurs supérieures à 400%.

5. Procédé selon l'un des revendications 1 à 4, **caractérisé en ce qu'**il comprend en outre une étape de caractérisation de la nature du matériau de la pièce, par comparaison de la fonction d'étalonnage avec au moins une fonction d'étalonnage caractéristique d'un matériau donné.

6. Procédé selon l'un des revendications 1 à 5, **caractérisé en ce qu'**il comprend en outre une étape de caractérisation de l'état de surface de la pièce, par comparaison de la valeur dudit paramètre (L*, a*, b*, ΔE), pour un taux de recouvrement donné, avec au moins une valeur dudit paramètre (L*, a*, b*, ΔE), caractéristique d'un état de surface donné, pour le même taux de recouvrement donné.

7. Procédé selon l'une des revendications 1 à 6, **caractérisé en ce que** le traitement modifiant la rugosité de surface de ladite pièce est un grenaillage, un sablage ou un usinage.

8. Procédé selon l'une des revendications 1 à 7, **caractérisé en ce que** ladite pièce est une pièce de train d'atterrissage d'aéronef ou une pièce de turbomachine.


**Patentansprüche**

1. Verfahren zur Bestimmung des Deckungsgrades eines Metallteils, das einer Behandlung unterzogen wurde, die die Oberflächenrauheit des Teils verändert, **dadurch gekennzeichnet, dass** es die folgenden Schritte umfasst:

   - einen Schritt zur Bestimmung einer Kalibrierfunktion (C) mindestens eines Parameters (L*, a*, b*, ΔE) des Farbraumes CIELAB in Abhängigkeit von dem Deckungsgrad, um einem gegebenen Wert des mindestens einen Parameters (L*, a*, b*, ΔE) den entsprechenden Wert des Deckungsgrades zuweisen zu können,
   - einen Schritt zur Messung des Wertes des mindestens einen Parameters (L*, a*, b*, ΔE) des Teils, und
   - einen Schritt zur Bestimmung des Deckungsgrades des Teils, durch Zuweisen, mithilfe der Kalibrierfunktion (C), zum so gemessenen Wert des mindestens einen Parameters (L*, a*, b*, ΔE), des entsprechenden Werts des Deckungsgrades des Teils,
   dadurch, dass die Bestimmung einer Kalibrierfunktion des mindestens einen Parameters (L*, a*, b*, ΔE) des Farbraums CIELAB in Abhängigkeit von dem Deckungsgrad durch Messen des Wertes eines Parameters des Farbraumes CIELAB für verschiedene Deckungsgrad-Werte eines Kalibrierteiles realisiert wird,
   dadurch, dass die verschiedenen Deckungsgrad-Werte des Kalibrierteiles einem vorbestimmten Intervall angehören,
   und dadurch, dass das vorbestimmte Deckungsgrad-Intervall Werte von mehr als 100% umfasst.

2. Verfahren nach Anspruch 1, **dadurch gekennzeichnet, dass** der mindestens eine Parameter (L*, a*, b*, ΔE) des Farbraumes CIELAB aus der Helligkeit L*, der chromatischen Komponente von grün bis rot a*, und der chromatischen Komponente von blau bis gelb b* ausgewählt wird.

3. Verfahren nach Anspruch 2, **dadurch gekennzeichnet, dass** der mindestens eine Parameter (L*, a*, b*, ΔE) des Farbraumes CIELAB eine Kolorimetrie-Abweichung ΔE zwischen zwei unterschiedlichen Oberflächenbeschaffenheiten ist, die durch folgende Beziehung definiert wird:

$$E_{2-1} = \Delta E = \sqrt{(L^*_2 - L^*_1)^2 + (a_2 - a^*_1)^2 + (b^*_2 - b^*_1)^2}$$

in der ($L^*_1$ ; $a^*_1$, $b^*_1$) und ($L^*_2$ ; $a^*_2$, $b^*_2$) die Parameter des Farbraumes CIELAB für zwei unterschiedliche Oberflächenbeschaffenheiten sind.

4. Verfahren nach einem der Ansprüche 1 bis 3, **dadurch gekennzeichnet, dass** das vorbestimmte Deckungsgrad-Intervall Werte von mehr als 400% umfasst.

5. Verfahren nach einem der Ansprüche 1 bis 4, **dadurch gekennzeichnet, dass** es weiter einen Schritt zur Charakterisierung der Art des Werkstoffs des Teils durch Vergleichen der Kalibrierfunktion mit mindestens einer charakteristischen Kalibrierfunktion eines gegebenen Werkstoffes umfasst.

6. Verfahren nach einem der Ansprüche 1 bis 5, **dadurch gekennzeichnet, dass** es weiter einen Schritt zur Charakterisierung der Oberflächenbeschaffenheit des Teils durch Vergleichen des Werts des Parameters ($L^*$, $a^*$, $b^*$, $\Delta E$), für einen gegebenen Deckungsgrad, mit mindestens einem Wert des Parameters ($L^*$, $a^*$, $b^*$, $\Delta E$) umfasst, der charakteristisch für eine gegebene Oberflächenbeschaffenheit für denselben gegebenen Deckungsgrad ist.

7. Verfahren nach einem der Ansprüche 1 bis 6, **dadurch gekennzeichnet, dass** die Behandlung, die die Oberflächenrauheit des Teils verändert, ein Kugelstrahlen, ein Sandstrahlen oder eine Bearbeitung ist.

8. Verfahren nach einem der Ansprüche 1 bis 7, **dadurch gekennzeichnet, dass** das Teil ein Teil eines Fahrwerks eines Flugzeugs oder ein Teil eines Turbotriebwerks ist.

**Claims**

1. Method for determining the degree of coverage of a metal part having undergone a treatment modifying the surface roughness of said part, **characterised in that** it comprises the following steps:

   - a step of determining a calibration function (C) of at least one parameter ($L^*$, $a^*$, $b^*$, $\Delta E$) of the CIELAB colour space as a function of the degree of coverage, in such a way as to be able to associate a given value of said at least one parameter ($L^*$, $a^*$, $b^*$, $\Delta E$) with the corresponding value of the degree of coverage,
   - a step of measuring the value of said at least one parameter ($L^*$, $a^*$, $b^*$, $\Delta E$) of said part, and
   - a step of determining the degree of coverage of said part, by associating, using the calibration function (C), to the value thus measured of said at least one parameter ($L^*$, $a^*$, $b^*$, $\Delta E$), the corresponding value of the degree of coverage of the part,
   **in that** the determination of a calibration function of said at least one parameter ($L^*$, $a^*$, $b^*$, $\Delta E$) of the CIELAB colour space as a function of the degree of coverage is achieved by measuring the value of a parameter of the CIELAB colour space for different values of degree of coverage of a calibration part,
   **in that** that the different values of the degree of coverage of the calibration part belong to a predetermined interval, and **in that** the predetermined interval of degree of coverage comprises values greater than 100%.

2. Method according to claim 1, **characterised in that** said at least one parameter ($L^*$, $a^*$, $b^*$, $\Delta E$) of the CIELAB colour space is selected from among the clarity $L^*$, the chromatic component from green to red $a^*$, and the chromatic component from blue to yellow $b^*$.

3. Method according to claim 2, **characterised in that** said at least one parameter ($L^*$, $a^*$, $b^*$, $\Delta E$) of the CIELAB colour space is a colorimetric difference $\Delta E$ between two different surface states, defined by the relationship:

$$E_{2-1} = \Delta E = \sqrt{(L^*_2 - L^*_1)^2 + (a_2 - a^*_1)^2 + (b^*_2 - b^*_1)^2}$$

wherein ($L^*_1$; $a^*_1$, $b^*_1$) and ($L^*_2$; $a^*_2$, $b^*_2$) are the parameters of the CIELAB colour space for two different surface states.

4. Method according to any of claims 1 to 3, **characterised in that** the predetermined interval of the degree of coverage comprises values greater than 400%.

5. Method according to any of claims 1 to 4, **characterised in that** it further comprises a step of characterising the nature of the material of the part, by comparing the calibration function with at least one calibration function characteristic of a given material.

6. Method according to any of claims 1 to 5, **characterised in that** it further comprises a step of characterising the surface state of the part, by comparing the value of said parameter (L*, a*, b*, $\Delta E$), for a given degree of coverage, with at least one value of said parameter (L*, a*, b*, $\Delta E$), characteristic of a given surface state, for the same given degree of coverage.

7. Method according to any of claims 1 to 6, **characterised in that** the treatment modifying the surface roughness of said part is a shot-peening, a sandblasting or a machining.

8. Method according to any of claims 1 to 7, **characterised in that** said part is an aircraft landing gear part or a turbine engine part.

L=100

+b

-a　　　+a

-b

L

**Fig. 1**

+b　　　+a

-a　　　-b

L

**Fig. 2**

réflexion
diffuse

rayon
incident

réflexion
spéculaire

**Fig. 3**

S

Fig. 4

Taux de recouvrement (%)

Fig. 5

Fig. 6

Fig. 7

Fig. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 1468008 A
- JP 2011152603 A
- JP 2015160282 A